# FASCICULE DE BREVET EUROPEEN

(11) **EP 3 953 227 B1**
(45) Date de publication et mention de la délivrance du brevet: **05.11.2025**
(21) Numéro de dépôt: 20731166.3
(22) Date de dépôt: 20.03.2020
(51) Int. Cl.: B64D 27/357, B64D 31/16, B60L 15/02, B60L 50/15, B64D 41/00, H02J 3/28, H02J 3/36, H02J 7/00, H02J 7/02, H02J 7/14

(54) **PROCEDE ET DISPOSITIF DE CONTROLE DE L'HYBRIDATION D'UN AERONEF**
VERFAHREN UND VORRICHTUNG ZUR STEUERUNG DER HYBRIDISIERUNG EINES FLUGZEUGS
METHOD AND DEVICE FOR CONTROLLING THE HYBRIDIZATION OF AN AIRCRAFT

(30) Priorité: 11.04.2019 FR 1903879
(43) Date de publication de la demande: 16.02.2022
(73) Titulaire: SAFRAN, 75015 Paris (FR); Safran Electrical & Power, 31702 Blagnac (FR); Safran Helicopter Engines, 64510 Bordes (FR)
(72) Inventeur: VINSON, Garance, 31702 BLAGNAC (FR); ROUGIER, Florent, 77550 MOISSY-CRAMAYEL (FR); BEDDOK, Stéphane, Meyer, 77550 MOISSY-CRAMAYEL (FR)
(74) Mandataire: Cabinet Beau de Loménie
(86) Numéro de dépôt international: PCT/FR2020/050614
(87) Numéro de publication internationale: WO 2020/208326

(56) Documents cités:
- EP-A1- 2 720 340
- EP-A1- 3 703 220
- US-A1- 2010 064 689
- US-A1- 2015 075 167
- US-A1- 2016 137 304
- US-A1- 2018 022 461

## Description

### Domaine Technique

L'invention se rapporte aux systèmes de propulsion hybride pour aéronef, plus particulièrement pour véhicules à décollage et atterrissage verticaux (VTOL pour « Vertical Take-Off and Landing »), et elle concerne un système de contrôle de la répartition de puissance entre les sources électriques en fonction des différents régimes de fonctionnement de l'aéronef.

### Technique antérieure

Les VTOL tendent à constituer un mode de transport intra urbain et inter urbain adapté à la livraison de marchandises ou le transfert de personnes et pour lesquels il existe une forte demande pour des systèmes de propulsion hybride, préférentiellement intégrés, du fait de l'autonomie encore limitée des batteries actuelles.

Dans un tel système de propulsion hybride, il y a deux sources de puissance électriques, un turbogénérateur et un ensemble de batteries, alimentant une ou plusieurs charges électriques, en fait un ou plusieurs moteurs électriques, via un ou plusieurs bus électriques à tension continue (bus HVDC). Le rôle des batteries est de suppléer le turbogénérateur en cas de panne et assister le turbogénérateur sur des points de fonctionnements où il ne peut pas répondre seul aux sollicitations des charges (transitoires ou permanentes), évitant ainsi de surdimensionner ou de trop solliciter le turbogénérateur.

La puissance maximale du turbogénérateur dépend de la température, de l'altitude, et est limitée en dynamique. L'avantage des batteries résulte du fait que la puissance peut être fournie par la batterie avec une dynamique plus rapide que la puissance fournie par le turbogénérateur en cas d'appel de puissance rapide.

Classiquement, un tel système de propulsion hybride comporte plusieurs régimes de fonctionnement:
- un régime de démarrage du turbogénérateur et de pré-charge des bus (où la puissance fournie au bus continu doit être limitée jusqu'à ce que les capacités soient pré-chargées),
- un régime hybride où les deux sources fournissent de la puissance,
- un régime électrique (sur consigne ou en cas de perte du turbogénérateur) où seule la batterie fournit de la puissance, et
- un régime thermique (sur consigne ou en cas de perte de la batterie) où seul le turbogénérateur fournit de la puissance.

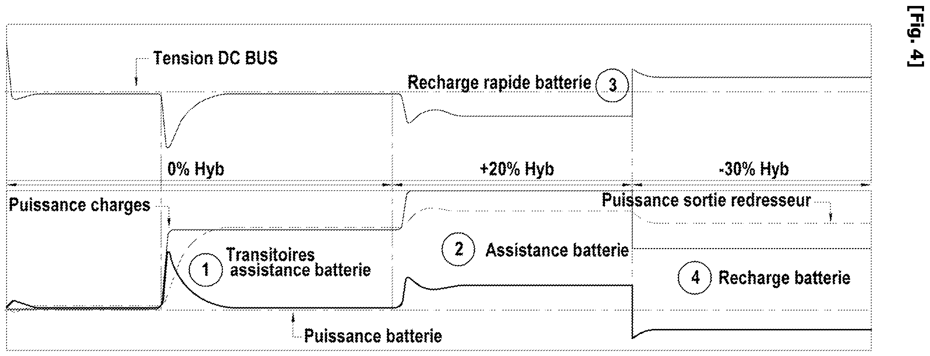

La figure 4 illustre plus précisément le régime de fonctionnement hybride qui recouvre quatre situations différentes:
- en 1), la batterie fournit les hautes dynamiques (en charge et décharge) qui ne sont pas couvertes par le turbogénérateur,
- en 2), la batterie fournit le surplus de puissance lorsque le turbogénérateur est en limite de puissance,
- en 3), il y a un pic de charge sur la batterie pour compenser la baisse de charge rapide (le turbogénérateur reste à haute puissance puisque sa dynamique est lente, donc cette puissance qui n'est plus utilisée par les charges électriques va dans la batterie, jusqu'à ce que la puissance du turbogénérateur corresponde à la puissance demandée par les charges électriques), et
- en 4) le turbogénérateur charge la batterie.

Cette prise en compte des différents régimes de fonctionnement nécessite un contrôle du système de propulsion hybride pour gérer la répartition de puissance entre les deux sources électriques.

Sur les systèmes actuels, ce contrôle de l'hybridation se fait via un contrôle en courant de la batterie au travers du convertisseur DC/DC reliant cette batterie au bus HVDC lorsque le ou les redresseurs en sortie de génératrice du turbogénérateur ne sont pas commandés ou à la fois au travers de ce convertisseur DC/DC et du redresseur AC/DC lorsque ce dernier est commandé, en recherchant des optimums locaux.

Or cette recherche d'optimums s'avère particulièrement délicate et il existe donc un besoin d'un système de contrôle de l'hybridation alternatif.

Les documents US 2015/075167 et US 2018/022461 décrivent des systèmes de contrôle de la répartition de puissance dans un système de propulsion hybride.

Il convient également de prendre en compte le document de l'état de la technique EP 3703220 A1, pertinent au titre de l'article 54(3) CBE, lequel antériorise le préambule des revendications indépendantes.

### Exposé de l'invention

L'invention a donc pour but de proposer un contrôle de l'hybridation d'un système de propulsion hybride moins complexe et plus performant, plus modulaire et plus évolutif tout en permettant une intégration et une installation optimisées sur l'aéronef. Un autre but de l'invention est de permettre des modes de contrôle en courant comme en tension, pour s'adapter aux différentes phases de vol et aux différents points de fonctionnement. Encore un but est de permettre de répondre aux différentes utilisations tant thermique, qu'électrique ou hybride du système de propulsion.

Ces buts sont atteints avec un procédé de contrôle de la répartition de puissance dans un système de propulsion hybride comportant une source électrique délivrant une tension alternative associée à un redresseur commandé AC/DC et une batterie, procédé caractérisé en ce que, le redresseur commandé AC/DC et la batterie étant reliés chacun directement à un bus continu HVDC alimentant au moins une charge électrique, le contrôle de la répartition de puissance est effectuée au travers du seul redresseur commandé AC/DC par une boucle de régulation sur une consigne de puissance à partir d'une puissance mesurée de la batterie et une boucle de régulation sur une consigne de tension à partir d'une tension mesurée du bus HVDC, ces deux boucles de régulation délivrant chacune une consigne de courant quadratique pour une boucle de régulation à partir d'un courant de la source électrique délivrant une tension alternative.

Par cette configuration, on supprime le convertisseur DC/DC entre la batterie et le bus HVDC, la batterie étant ainsi contrôlée de manière indirecte.

Avantageusement, la consigne en courant quadratique Iqref est délivrée sélectivement par l'une ou l'autre des deux boucles de régulation sur les consignes de puissance ou de tension, selon un régime de fonctionnement hybride du système de propulsion hybride pour l'une et un des régimes de fonctionnement thermique ou de démarrage du système de propulsion hybride pour l'autre. De même, la consigne de courant quadratique Idref est délivrée par un module de gestion de flux.

De préférence, la consigne en courant quadratique Iqref délivrée à la boucle de régulation est préalablement sommée par une valeur de courant correspondant à une estimation de la puissance consommée par la au moins une charge électrique.

En addition, la consigne de tension est délivrée par un gestionnaire de puissance et définie la tension à appliquer à la au moins une charge électrique.

La consigne de puissance est délivrée par un ensemble d'hybridation et définie la répartition de puissance souhaitée entre la au moins une source électrique délivrant une tension alternative et la au moins une batterie.

L'invention concerne également un dispositif de contrôle de la répartition de puissance mettant en œuvre le procédé précité, le système de propulsion hybride comprenant un tel dispositif de contrôle de la répartition de puissance et un aéronef notamment VTOL comprenant un tel système de propulsion hybride.

### Brève description des dessins

D'autres caractéristiques et avantages de la présente invention ressortiront de la description détaillée faite ci-dessous, en référence aux figures suivantes dépourvues de tout caractère limitatif et sur lesquelles :
[Fig. 1] La figure 1 illustre une architecture de contrôle de l'hybridation dans un aéronef pour la mise en œuvre du procédé de répartition de puissance selon la présente invention,
[Fig. 2] La figure 2 est un logigramme montrant le déroulement du procédé dans une première configuration de fonctionnement,
[Fig. 3] La figure 3 est un logigramme montrant le déroulement du procédé dans une seconde configuration de fonctionnement,
[Fig. 4] La figure 4 montre l'évolution de la charge de la batterie, de la puissance de la source électrique et de la puissance totale de la charge dans une architecture de contrôle de l'hybridation de l'art antérieur.

### Description des modes de réalisation

Selon l'invention, le contrôle de l'hybridation se fait en contrôlant la tension, la puissance (ou le courant de sortie) d'un ou de redresseurs commandés AC/DC (c'est-à-dire des redresseurs actifs) et non comme classiquement au travers d'un convertisseur DC/DC disposé entre la batterie et le bus continu HVDC. La puissance de la batterie est ainsi contrôlée de manière indirecte par un ou plusieurs redresseurs actifs.

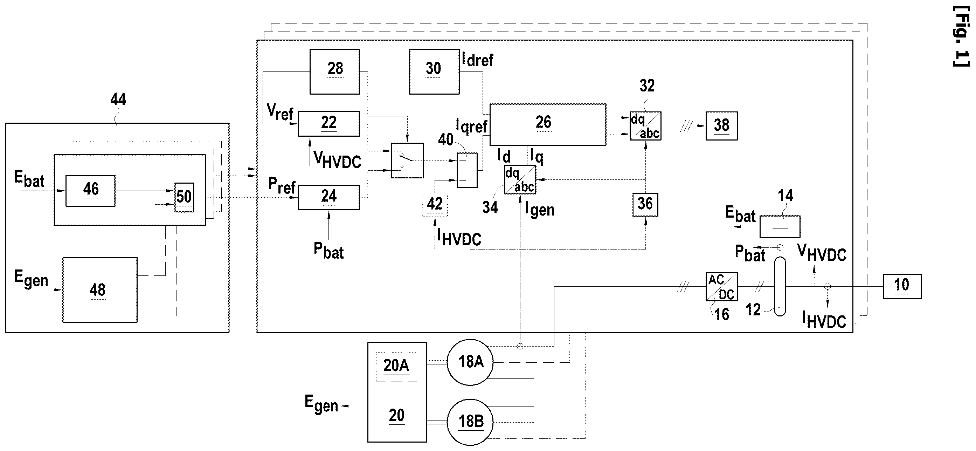

La figure 1 montre une architecture permettant ce contrôle de l'hybridation dans un système de propulsion hybride destiné à alimenter au moins un propulseur 10 depuis au moins un bus continu HVDC 12 sur lequel sont reliés au moins une batterie 14 et au moins un redresseur commandé AC/DC 16. Le ou les redresseurs actifs 16 sont montés en sortie d'une ou plusieurs sources électriques 18A, 18B délivrant une tension alternative et auxquelles ces redresseurs actifs sont associés pour la transformer en une tension continue. Cette source électrique peut être une simple génératrice électrique, une RAT, un APU ou un turbogénérateur muni d'une turbine à gaz 20 (dont l'unité de commande ou FADEC 20A est illustré en pointillés).

Selon l'invention, le contrôle de la répartition de puissance dans ce système de propulsion hybride est assuré au travers du redresseur commandé AC/DC 16 par une commande incluant trois boucles de régulation permettant de répondre à tous les régimes de fonctionnement du système de propulsion hybride : une première boucle de régulation de tension 22 sur une consigne de tension Vref à partir d'une mesure de la tension du bus continu HVDC V_{HVDC}, une deuxième boucle de régulation de puissance 24 sur une consigne de puissance Pref à partir d'une mesure de la puissance de la batterie Pbat, et une troisième boucle de régulation de courant rapprochée 26 sur une consigne de courant quadratique Idref, Iqref à partir d'une mesure du courant de la source électrique alternative Igen.

Les boucles de régulation de tension et de puissance sont utilisées sélectivement selon le régime de fonctionnement du système de propulsion hybride. Ainsi, la régulation de tension est utilisée lors du démarrage pour la pré-charge du bus continu HVDC 12 et en mode sans batterie (régime thermique), et la régulation de puissance est utilisée dans le régime hybride. La sélection de l'une ou l'autre de ces deux régulations fonction du régime de fonctionnement souhaité est effectuée par un gestionnaire de puissance 28 délivrant en outre la consigne de tension Vref.

On notera que la présence des deux boucles de régulation 22 et 24 dont la sélection est faite par le gestionnaire de puissance 28, permet de gérer très simplement une perte batterie ou une perte de la source électrique alternative (turbogénérateur par exemple) en passant du mode de régulation en puissance activé en régime de fonctionnement hybride au mode de régulation en tension activé dans les régimes de fonctionnement thermique ou tout électrique.

La sortie de la boucle de régulation (en tension ou en puissance) génère une partie de la consigne de courant quadratique de couple Iqref qui est envoyée vers la boucle de régulation de courant 26, l'autre partie de la consigne de courant quadratique de flux Idref étant issue d'un module de gestion de flux 30. Cette boucle de courant est unique et est utilisée en sortie de la boucle de tension 22 comme de la boucle de puissance 24 pour assurer une commande vectorielle du redresseur commandé AC/DC 16. Ce dernier étant commandé en tension, le courant quadratique doit être transformé en une tension triphasée par un module de conversion approprié 32 à l'image du courant triphasé Igen issu de la source électrique alternative et transformé en courant quadratique Id, Iq par un module de conversion correspondant 34. La synchronisation des conversions est effectuée en fonction de la position de la source alternative fournie par un module approprié 36. Enfin un module de modulation 38 applique la commande vectorielle demandée.

On notera qu'un additionneur 40 peut être ajouté une fois la sélection du régime de fonctionnement opéré par le gestionnaire de puissance 28, pour sommer la consigne de courant avec une valeur de courant correspondant à une estimation de puissance consommée par la ou les charges 10 avant son envoi dans la boucle de régulation de courant 22. Cette valeur de courant constitue une compensation de charge optionnelle qui peut être déduite de la mesure du courant I_{HVDC} du bus continu HVDC 12 dans un module de compensation approprié 42. Cela permet au redresseur actif 16 d'être plus réactif, et donc de soulager la batterie 14.

La consigne de puissance Pref est issue d'un ensemble d'hybridation 44 dont la fonction est de déterminer le taux d'hybridation, c'est-à-dire la puissance à fournir par la batterie et la puissance à fournir par le turbogénérateur. Cet ensemble d'hybridation connait l'état de charge de la batterie Ebat et l'état des puissances disponibles pour la source électrique de tension alternative (turbogénérateur ou autre) Egen et peut donc définir dans des modules appropriés 46, 48 à la fois une puissance batterie pour garantir l'état de charge de la batterie et la puissance que doit fournir la batterie en fonction de la capacité de fourniture de puissance de la turbine à gaz (dans le cas d'un turbogénérateur par exemple) et donc assurer la répartition de puissance souhaitée entre les deux. Il définit aussi dans un module de seuil 50 des seuils minimum et maximum de puissance de la batterie, de sorte que la source électrique alternative soit correctement assistée par la batterie, par exemple en ne lui demandant pas trop ou trop peu de puissance. Dans le cas où il y a plusieurs bus continu HVDC sur la même source électrique de tension alternative, cet ensemble d'hybridation attribue aussi à chacun des bus continu HVDC la puissance minimum et maximum par bus continu HVDC.

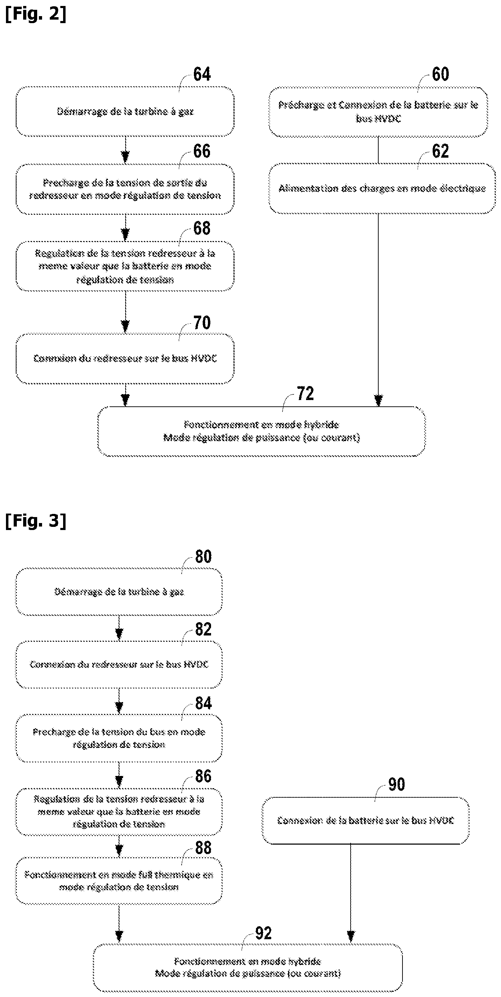

Les figures 2 et 3 montrent deux logigrammes illustrant le procédé de l'invention.

Sur la figure 2, la batterie est connectée sur le bus continu HVDC en premier, puis la source électrique alternative est connectée sur le bus continu HVDC qui a donc déjà été pré-chargé par la batterie. Plus précisément, dans une première étape 60, il est effectué une pré-charge et une connexion de la batterie 14 au bus continu HVDC 12. Le système de propulsion hybride est alors dans une étape suivante 62 apte à fonctionner en régime électrique d'alimentation des charges. Ensuite, dans une étape 64, la turbine à gaz 20 est démarrée. Il est alors procédé dans une étape suivante 66 à une pré-charge de la tension du redresseur commandé AC/DC 16 en mode régulation de tension et dans une étape 68 toujours en mode régulation de tension à une régulation de la tension du redresseur commandé AC/DC 16 à une valeur identique à celle de la batterie 14. Une fois le redresseur commandé AC/DC 16 connecté au bus continu HVDC 12 dans une étape suivante 70, un fonctionnement en régime hybride en mode régulation de puissance est alors possible dans une étape terminale 72.

Sur la figure 3, la source électrique de tension alternative est connectée sur le bus continu HVDC en premier, puis la batterie est connectée sur le bus HVDC qui a donc déjà été pré-chargé par cette source électrique de tension alternative. Plus précisément, dans une première étape 80, la turbine à gaz 20 est démarrée et le redresseur commandé AC/DC 16 est connecté au bus continu HVDC 12 dans une étape 82. Il est alors procédé dans une étape suivante 84 à une pré-charge de la tension du bus continu HVDC en mode régulation de tension et dans une étape 86 toujours en mode régulation de tension à une régulation de la tension du redresseur commandé AC/DC 16 à une valeur identique à celle de la batterie 14. Le système de propulsion hybride est alors dans une étape suivante 88 apte à fonctionner en régime thermique. Une fois la batterie connectée au bus continu HVDC dans une étape 90, un fonctionnement en régime hybride en mode régulation de puissance est alors possible dans une étape terminale 92.

Ainsi, avec la présente invention, il est possible :
- de gérer la répartition de puissance en définissant quelle puissance provient de la source électrique de tension alternative (par exemple un turbogénérateur) et quelle puissance provient des batteries, et le contrôle des sources électriques en vérifiant que la consigne de puissance définie par cette répartition est bien appliquée,
- de s'adapter aux différents régimes de fonctionnement du système de propulsion hybride (thermique, tout électrique, hybride),
- de s'adapter aux capacités de fourniture de puissance et d'énergie des deux sources et au besoin en puissance des charges électriques (propulseurs),
- d'offrir une solution d'hybridation évolutive et pouvant répondre aux différents besoins (hybride série, hybride parallèle, système complet ou partiel, systèmes centralisés ou ségrégués, etc....) et à l'évolution des capacités des batteries,
- d'offrir une solution d'hybridation optimisée en masse,
- d'offrir une solution d'hybridation la moins complexe possible (en nombre de modules, de logiques, etc...),
- d'optimiser la fiabilité.

## Revendications

1. Procédé de contrôle de la répartition de puissance dans un système de propulsion hybride comportant au moins une source électrique délivrant une tension alternative (18A, 18B) associée à un redresseur commandé AC/DC (16) et au moins une batterie (14), le redresseur commandé AC/DC et la batterie étant reliés chacun directement à un bus continu HVDC (12) alimentant au moins une charge électrique, le contrôle de la répartition de puissance étant effectuée au travers du seul redresseur commandé AC/DC (16) par une boucle de régulation sur une consigne de puissance (Pref) à partir d'une puissance mesurée de la batterie (Pbat) et une boucle de régulation sur une consigne de tension (Vref) à partir d'une tension mesurée du bus HVDC (V_{HVDC}), l'une ou l'autre de ces deux boucles de régulation délivrant une consigne de courant quadratique Idref et Iqref pour une boucle de régulation à partir d'un courant (Igen) de la source électrique délivrant une tension alternative,
**caractérisé en ce que** la consigne de courant quadratique Iqref est délivrée sélectivement, par l'une ou l'autre des deux boucles de régulation sur les consignes de puissance ou de tension, selon un régime de fonctionnement hybride du système de propulsion hybride pour l'une et un des régimes de fonctionnement thermique ou de démarrage du système de propulsion hybride pour l'autre.

2. Procédé selon la revendication 1, **caractérisé en ce que** la consigne de courant quadratique Iqref délivrée à la boucle de régulation est préalablement sommée par une valeur de courant correspondant à une estimation de la puissance consommée par ladite au moins une charge électrique.

3. Procédé selon la revendication 1, **caractérisé en ce que** la consigne de courant quadratique Idref est délivrée par un module de gestion de flux (30).

4. Procédé selon l'une quelconque des revendications 1 à 3, **caractérisé en ce que** la consigne de tension (Vref) est délivrée par un gestionnaire de puissance (28) et définie la tension à appliquer à la au moins une charge électrique.

5. Procédé selon l'une quelconque des revendications 1 à 4, **caractérisé en ce que** la consigne de puissance (Pref) est délivrée par un ensemble d'hybridation (44) et définie la répartition de puissance souhaitée entre la au moins une source électrique délivrant une tension alternative et la au moins une batterie.

6. Dispositif de contrôle de la répartition de puissance dans un système de propulsion hybride comportant au moins une source électrique délivrant une tension alternative associée à un redresseur commandé AC/DC et au moins une batterie, le redresseur commandé AC/DC et la batterie étant reliés chacun directement à un bus continu HVDC alimentant au moins une charge électrique, le dispositif étant configuré pour effectuer le contrôle de la répartition de puissance au travers du redresseur commandé AC/DC (16) par une boucle de régulation sur une consigne de puissance (Pref) à partir d'une puissance mesurée de la batterie (Pbat) et une boucle de régulation sur une consigne de tension (Vref) à partir d'une tension mesurée du bus HVDC (V_{HVDC}), l'une ou l'autre de ces deux boucles de régulation délivrant une consigne de courant quadratique Idref et Iqref pour une boucle de régulation à partir d'un courant (Igen) de la source électrique délivrant une tension alternative,
**caractérisé en ce que** la consigne de courant quadratique Iqref est délivrée sélectivement, par l'une ou l'autre des deux boucles de régulation sur les consignes de puissance ou de tension, selon un régime de fonctionnement hybride du système de propulsion hybride pour l'une et un des régimes de fonctionnement thermique ou de démarrage du système de propulsion hybride pour l'autre.

7. Système de propulsion hybride comprenant un dispositif de contrôle de la répartition de puissance selon la revendication 6.

8. Aéronef de type véhicule à décollage et atterrissage verticaux VTOL comprenant un système de propulsion hybride selon la revendication 7.

## Patentansprüche

1. Verfahren zur Steuerung der Leistungsverteilung in einem Hybridantriebssystem, das zumindest eine elektrische Quelle beinhaltet, die eine Wechselspannung (18A, 18B) liefert, die einem gesteuerten AC/DC-Gleichrichter (16) und zumindest einer Batterie (14) zugeordnet ist, wobei der gesteuerte AC/DC-Gleichrichter und die Batterie jeweils direkt mit einem HVDC-Gleichstrom-Bus (12) verbunden sind, der zumindest eine elektrische Last versorgt, wobei die Steuerung der Leistungsverteilung über den einzigen gesteuerten AC/DC-Gleichrichter (16) durch eine Regelschleife auf einem Leistungssollwert (Pref) ausgehend von einer gemessenen Leistung der Batterie (Pbat) und eine Regelschleife auf einem Spannungssollwert (Vref) ausgehend von einer gemessenen Spannung des HVDC-Busses (V_{HVDC}) erfolgt, wobei eine der beiden Regelschleifen einen quadratischen Stromsollwert Idref und Iqref für eine Regelschleife ausgehend von einem Strom (Igen) der elektrischen Quelle liefert, die eine Wechselspannung liefert,
**dadurch gekennzeichnet, dass** der quadratische Stromsollwert Iqref selektiv von der einen oder der anderen der beiden Regelschleifen auf die Leistungs- oder Spannungssollwerte geliefert wird, gemäß einem Hybridbetriebszustand des Hybridantriebssystems für die eine, und einem der thermischen oder Anfahrbetriebszustände des Hybridantriebssystems für die andere.

2. Verfahren nach Anspruch 1, **dadurch gekennzeichnet, dass** der an die Regelschleife gelieferte quadratische Stromsollwert Iqref zuvor durch einen Stromwert summiert wird, der einer Schätzung der von der zumindest einen elektrischen Last verbrauchten Leistung entspricht.

3. Verfahren nach Anspruch 1, **dadurch gekennzeichnet, dass** der quadratische Stromsollwert Idref von einem Flussverwaltungsmodul (30) ausgegeben wird.

4. Verfahren nach einem der Ansprüche 1 bis 3, **dadurch gekennzeichnet, dass** der Spannungssollwert (Vref) von einem Leistungsregler (28) ausgegeben wird und die Spannung definiert, die an die zumindest eine elektrische Last angelegt werden soll.

5. Verfahren nach einem der Ansprüche 1 bis 4, **dadurch gekennzeichnet, dass** der Leistungssollwert (Pref) von einer Hybridisierungsanordnung (44) ausgegeben wird und die gewünschte Leistungsverteilung zwischen der zumindest einen elektrischen Quelle, die eine Wechselspannung liefert, und der zumindest einen Batterie definiert.

6. Vorrichtung zur Steuerung der Leistungsverteilung in einem Hybridantriebssystem, das zumindest eine elektrische Quelle beinhaltet, die eine Wechselspannung liefert, die einem gesteuerten AC/DC-Gleichrichter und zumindest einer Batterie zugeordnet ist, wobei der gesteuerte AC/DC-Gleichrichter und die Batterie jeweils direkt mit einem HVDC-Gleichstrom-Bus verbunden sind, der zumindest eine elektrische Last versorgt, wobei die Vorrichtung dazu ausgestaltet ist, die Steuerung der Leistungsverteilung über den gesteuerten AC/DC-Gleichrichter (16) durch eine Regelschleife auf einem Leistungssollwert (Pref) ausgehend von einer gemessenen Leistung der Batterie (Pbat) und eine Regelschleife auf einem Spannungssollwert (Vref) ausgehend von einer gemessenen Spannung des HVDC-Busses (V_{HVDC}) durchzuführen, wobei eine der beiden Regelschleifen einen quadratischen Stromsollwert Idref und Iqref für eine Regelschleife ausgehend von einem Strom (Igen) der elektrischen Quelle liefert, die eine Wechselspannung liefert,
**dadurch gekennzeichnet, dass** der quadratische Stromsollwert Iqref selektiv von der einen oder der anderen der beiden Regelschleifen auf die Leistungs- oder Spannungssollwerte geliefert wird, gemäß einem Hybridbetriebszustand des Hybridantriebssystems für die eine, und einem der thermischen oder Anfahrbetriebszustände des Hybridantriebssystems für die andere.

7. Hybridantriebssystem, das eine Vorrichtung zur Steuerung der Leistungsverteilung nach Anspruch 6 umfasst.

8. Luftfahrzeug vom senkrecht startenden und landenden Typ VTOL, das ein Hybridantriebssystem nach Anspruch 7 umfasst.

## Claims

1. A method for controlling the power distribution in a hybrid propulsion system including at least one electrical power source delivering an AC voltage (18A, 18B) associated with a controlled AC/DC rectifier (16) and at least one battery (14), the controlled AC/DC rectifier and the battery being each directly connected to an HVDC DC bus (12) powering at least one electrical load, the control of the power distribution is performed through the controlled AC/DC rectifier (16) on its own by a regulation loop on a power setpoint (Pref) based on a measured power of the battery (Pbat) and a regulation loop on a voltage setpoint (Vref) based on a measured voltage of the HVDC bus (V_{HVDC}), one or the other of these two regulation loops each delivering a quadratic current setpoint Idref and Iqref for a regulation loop based on a current (Igen) of the electrical power source delivering an AC voltage,
**characterized in that** the quadratic current setpoint Iqref is selectively delivered by one or the other of the two regulation loops on the power or voltage setpoints, according to a hybrid rating of the hybrid propulsion system for one of them and one of the thermal or start-up ratings of the hybrid propulsion system for the other.

2. The method as claimed in claim 1, **characterized in that** the quadratic current setpoint Iqref delivered to the regulation loop is previously summed by a current value equivalent to an estimate of the power consumed by said at least one electrical load.

3. The method as claimed in claim 1, **characterized in that** the quadratic current setpoint Idref is delivered by a flux management module (30).

4. The method as claimed in any of claims 1 to 3, **characterized in that** the voltage setpoint (Vref) is delivered by a power manager (28) and defines the voltage to be applied to the at least one electrical load.

5. The method as claimed in any of claims 1 to 4, **characterized in that** the power setpoint (Pref) is delivered by a hybridization assembly (44) and defines the desired power distribution between the at least one electrical power source delivering an AC voltage and the at least one battery.

6. A device for controlling the power distribution between an electrical power source delivering an AC voltage associated with a controlled AC/DC rectifier and a battery, the controlled AC/DC rectifier and the battery each being directly connected to an HVDC DC bus powering at least one electrical load, the device being configured to perform the control of the power distribution through the controlled AC/DC rectifier (16) by a regulation loop on a power setpoint (Pref) based on a measured power of the battery (Pbat) and a regulation loop on a voltage setpoint (Vref) based on a measured voltage of the HVDC bus (V_{HVDC}), one or the other of these two regulation loops each delivering a quadratic current setpoint Idref and Iqref for a regulation loop based on a current (Igen) of the electrical power source delivering an AC voltage,
**characterized in that** the quadratic current setpoint Iqref is selectively delivered by one or the other of the two regulation loops on the power or voltage setpoints, according to a hybrid rating of the hybrid propulsion system for one of them and one of the thermal or start-up ratings of the hybrid propulsion system for the other.

7. A hybrid propulsion system comprising a device for controlling power distribution as claimed in claim 6.

8. An aircraft of VTOL Vertical Take-Off and Landing type comprising a hybrid propulsion system as claimed in claim 7.
